# EUROPÄISCHE PATENTSCHRIFT

(11) **EP 1 308 067 B1**
(45) Veröffentlichungstag und Bekanntmachung des Hinweises auf die Patenterteilung: **11.05.2005**
(21) Anmeldenummer: 01973994.5
(22) Anmeldetag: 07.08.2001
(51) Int. Cl.: H04Q 7/38, H04L 29/06, H04B 7/02

(54) **VERFAHREN UND MOBILES DATENÜBERTRAGUNGSSYSTEM ZUR DURCHFÜHRUNG EINES HANDOVERS UNTER DATENDUPLIZIERUNG**
METHOD AND MOBILE DATA TRANSMISSION SYSTEM FOR EXECUTING A HANDOVER USING DATA DUPLICATION
PROCEDE ET SYSTEME MOBILE DE TRANSMISSION DE DONNEES POUR EFFECTUER UN TRANSFERT AVEC DUPLICATION DE DONNEES

(30) Priorität: 10.08.2000 DE 10039193
(43) Veröffentlichungstag der Anmeldung: 07.05.2003
(73) Patentinhaber: Siemens Aktiengesellschaft, 80333 München (DE)
(72) Erfinder: MENZEL, Christian, 82216 Maisach (DE); TRAYNARD, Jean-Michel, 81667 München (DE)
(86) Internationale Anmeldenummer: PCT/DE2001/003018
(87) Internationale Veröffentlichungsnummer: WO 2002/013565

(56) Entgegenhaltungen:
- WO-A-00/05909
- O'NEILL A ET AL: "Edge Mobility Architecture" INTERNET DRAFT, Juli 2000 (2000-07), XP002169893
- ENEROTH G ET AL: "APPLYING ATM/AAL2 AS A SWITCHING TECHNOLOGY IN THIRD-GENERATION MOBILE ACCESS NETWORKS" IEEE COMMUNICATIONS MAGAZINE, IEEE SERVICE CENTER. PISCATAWAY, N.J, US, Bd. 37, Nr. 6, Juni 1999 (1999-06), Seiten 112-122, XP000835287 ISSN: 0163-6804
- VALKO A G: "CELLULAR IP: A NEW APPROACH TO INTERNET HOST MOBILITY" COMPUTER COMMUNICATIONS REVIEW, ASSOCIATION FOR COMPUTING MACHINERY. NEW YORK, US, Bd. 29, Nr. 1, Januar 1999 (1999-01), Seiten 50-65, XP000823873 ISSN: 0146-4833
- SENEVIRATNE A ET AL: "CELLULAR NETWORKS AND MOBILE INTERNET" COMPUTER COMMUNICATIONS, ELSEVIER SCIENCE PUBLISHERS BV, AMSTERDAM, NL, Bd. 21, Nr. 4, 15. September 1998 (1998-09-15), Seiten 1244-1255, XP000667617 ISSN: 0140-3664
- SESHAN S ET AL: "HANDOFFS IN CELLULAR WIRELESS NETWORKS: THE DAEDALUS IMPLEMENTATIONAND EXPERIENCE" WIRELESS PERSONAL COMMUNICATIONS, KLUWER ACADEMIC PUBLISHERS, NL, Bd. 4, Nr. 2, 1. März 1997 (1997-03-01), Seiten 141-162, XP000728589 ISSN: 0929-6212

## Beschreibung

Die vorliegende Erfindung betrifft die Realisierung eines Handovers in einem mobilen Datenübertragungssystem, wobei in dem mobilen Datenübertragungssystem zumindest teilweise eine Datenweiterleitung auf Basis des Internet Protokolls (IP) erfolgt. Es ist also zumindest ein Teil der Einrichtungen des Datenübertragungssystems untereinander durch ein IP-Netzwerk verbunden. Damit erfolgt zumindest in einem Teilbereich des Datenübertragungssystems eine paketdatenbasierte Datenübertragung. Eine solche Verbindung durch ein IP-Netzwerk ist grundsätzlich aus dem Stand der Technik bekannt. Beispielhaft wird hierzu auf WO 98/38808 verwiesen.

Es sind aber auch andere Möglichkeiten zur Verbindung der Einrichtungen eines mobilen Datenübertragungssystems bekannt, wie sie beispielsweise bei derzeit existierenden Mobilfunksystemen Anwendung finden. Dabei sind die Einrichtungen z.B. durch ATM-Netze oder PCM30-Leitungen untereinander verbunden.

Die vorliegende Erfindung ist jedoch nicht nur auf solche Mobilfunksysteme beschränkt, sondern kann grundsätzlich bei unterschiedlichen Arten von mobilen Datenübertragungssystemen Anwendung finden, die zur Übertragung beliebiger Daten wie Multimediadaten, Sprachdaten, Daten aus Computernetzwerken oder ähnlichem ausgebildet sein können.

Die bislang aus dem Stand der Technik bekannten Systeme und Verfahren zur Durchführung eines Handovers zeigen den Nachteil, dass die Weiterleitung der Daten innerhalb des mobilen Datenübertragungssystems ein hoher Aufwand notwendig ist. Insbesondere kann bei bisherigen Systemen und Verfahren vorkommen, dass bei einem Handover von einer ersten Sende-/Empfangseinrichtung zu einer zweiten Sende-/Empfangseinrichtung ein mobiles Endgerät während und nach einem erfolgten Handover zwar von der zweiten Sende-/Empfangseinrichtung versorgt wird, der Datenstrom vom Datenübertragungssystem zum Endgerät jedoch weiterhin über die erste Sende-/Empfangseinrichtung geführt werden muss, um einen kontinuierlichen Datenstrom zu gewährleisten. Eine Änderung des Weges der Datenweiterleitung innerhalb des Datenübertragungssystems kann in solchen Fällen meist nur unter einem erheblichen Aufwand erfolgen. Auch kann gerade in einem paketdatenbasierten Netzwerk der Aufbau der Verbindung von der zweiten Sende-/Empfangseinrichtung zum mobilen Endgerät eine relativ lange Zeit bis zu einigen Sekunden beanspruchen, was für die Realisierung von Echtzeit-Kommunikationsverbindungen wie Sprach- oder Multimediaverbindungen in solchen Datenübertragungssystemen nicht tragbar ist.

In A. O'Neill et al., "Edge Mobility Architecture", Internet Draft, Juli 2000, XP002169893, werden Handover-Szenarien für eine Edge Mobility Architecture (EMA) beschrieben. Während eines Handovers kann dabei eine Verbindung zwischen einem alten Access Router (OAR) und einem neuen Access Router (NAR) eingerichtet werden. Über diese Verbindung können Daten vom alten Access Router an den neuen Access Router,übertragen werden. Für den Ablauf eines Handovers werden zwei Varianten beschrieben. Zum einen kann die Verbindung zum alten Access Router unterbrochen werden, bevor die Verbindung zum neuen Access Router besteht, zum anderen wird die Verbindung zum alten Access Router erst nach dem Verbindungsaufbau zum neuen Access Router abgebrochen.

In G. Eneroth et al., "Applying ATM/AAL2 as a switching technology in third-generation mobile access networks", IEEE communications magazine, IEEE service center Piscataway, N.J., US, Bd. 37, Nr.6, Juni 1999, Seiten 112 - 122, XP000835287 ISSN: 0163-6804, wird ein Soft Handover in einem mobilen Kommunikationssystem der dritten Generation beschrieben, das ATM (Asychronous Transfer Mode) verwendet.

In A. G. Valko, "Cellular IP: A new approach to internet host mobility", Computer Communications Review, Association for Computer Machinery, New York, US, Bd. 29, Nr. 1, Januar 1999, Seiten 50 - 65, XP000823873 ISSN: 0146-4833, wird ein IPbasiertes mobiles Kommunikationssystem beschrieben, bei dem bei einem durch ein mobiles Endgerät eingeleiteten Handoff die Daten in Abwärtsrichtung an die alte und die neue Basisstation übertragen werden.

In der WO 01/78436 A1 wird ein Verfahren beschrieben, bei dem Daten durch einen so genannten macro diversity combiner geleitet und anschließend von einer Basisstation an eine Mobilstation übertragen werden, während von der Mobilstation über die Basisstation empfangene Daten durch den macro diversity combiner an eine Feststation weitergeleitet werden. In dem macro diversity combiner werden die an die Mobilstation zu übertragenden Daten dupliziert und/oder die von der Mobilstation empfangenen Daten kombiniert, falls die Mobilstation mit einer Vielzahl von Basisstationen gleichzeitig verbunden ist.

Aufgabe der vorliegenden Erfindung ist es, ein Verfahren und eine Anordnung zur Durchführung eines Handovers eines mobilen Endgerätes in einem mobilen Datenübertragungssystem bereitzustellen, das eine Anpassung und Optimierung der Datenweiterleitung im Datenübertragungssystem auf vereinfachte Weise ermöglicht.

Diese Aufgabe wird gelöst durch das erfindungsgemäße Verfahren nach Anspruch 1 und die erfindungsgemäße Anordnung nach Anspruch 8.

Bei dem erfindungsgemäßen Verfahren zur Durchführung eines Handovers eines mobilen Endgerätes in einem mobilen Datenübertragungssystem von einer ersten Sende-/Empfangseinrichtungen des mobilen Datenübertragungssystems zu einer zweiten Sende-/Empfangseinrichtung ist, wie bereits beschrieben, vorgesehen, dass in dem mobilen Datenübertragungssystem zumindest teilweise eine Datenweiterleitung auf Basis des Internet Protokolls (IP) erfolgt. Nun werden erfindungsgemäß zumindest während eines Teils der Dauer des Handovers die vom mobilen Datenübertragungssystem an das Endgerät übertragenen Daten (Downlink-Richtung) im mobilen Datenübertragungssystem dupliziert und sowohl an die erste Sende-/Empfangseinrichtung als auch an die zweite Sende-/Empfangseinrichtung weitergeleitet. Man kann damit bereits zu einem frühen Zeitpunkt erreichen, dass die zweite Sende-/Empfangseinrichtung dieselbe Kenntnis über die zu übertragenden Daten besitzt wie die erste Sende-/Empfangseinrichtung, so dass insbesondere eine Weiterleitung der Daten von der ersten zur zweiten Sende-/Empfangseinrichtung vermieden werden kann. Die notwendige Duplizierung der Daten kann gerade in einem IP-basierten Netzwerk auf einfache Weise durch eine Duplizierung von IP-Datenpaketen erfolgen. Auch wird durch das identische Vorliegen der Daten ein späteres Optimieren der Datenweiterleitung nach dem erfolgreichen Handover, nämlich ausschließlich über die zweite Sende-/Empfangseinrichtung erleichtert, da in beiden Sende-/Empfangseinrichtungen dann identische Kenntnisse über die Daten vorliegen. Schließlich kann der Aufbau der Kommunikationsverbindung von der zweiten Sende-/Empfangseinrichtung zum mobilen Endgerät beschleunigt werden, da in der Sende-/Empfangseinrichtung bereits deutlich vor dem Aufbau der Kommunikationsverbindung durch die Duplizierung der Daten alle zur kontinuierlichen Fortsetzung der Kommunikationsverbindung zwischen Datenübertragungssystem und Endgerät notwendigen Daten vorliegen.

Es kann die Duplizierung der Daten auf unterschiedliche Weise erfolgen. Bevorzugt kann jedoch zur Ausnutzung der Vorteile eines IP-basierten Netzwerkes vorgesehen werden, dass eine Änderung der Adressierung der Daten im mobilen Datenübertragungssystem erfolgt.

Es sind nun geeignete Adressen auszuwählen, die eine Duplizierung erlauben. Hierzu kann als zu ändernde Adresse eine Adresse einer Einrichtung des mobilen Datenübertragungssystems gewählt werden. Es werden dann die Daten entweder an eine Einrichtung mit einer bestimmten IP-Adresse weitergeleitet, die die Duplizierung der Daten vornimmt und diese dann an die Adressen der ersten und zweiten Sende-/Empfangseinrichtung adressiert. Die Duplizierung wird damit im wesentlichen durch eine Änderung der Adressierung der Daten realisiert, also durch ein sogenanntes Rerouting. Auch der Beginn und das Ende einer solchen Duplizierung kann über die Adressierung der Daten gesteuert werden, da diese Adressierung im ersten Schritt die zu duplizierenden Daten zu der duplizierenden Einrichtung des Datenübertragungssystems leitet. Im Rahmen der gesamten Duplizierung der Daten werden also lediglich interne Parameter des Datenübertragungssystems, jedoch keinerlei endgerätespezifische Informationen oder Informationen über den das Endgerät benutzenden Teilnehmer benötigt, was die Durchführung des Handovers wiederum wesentlich vereinfacht.

Um eine noch weitergehende Optimierung des Handovervorgangs zu erreichen, können im Rahmen der Duplizierung der Daten in einem Datenspeicher der ersten Sende-/Empfangseinrichtung gespeicherte, an das Endgerät zu sendende Daten und vom Endgerät empfangene Daten an die zweite Sende-/Empfangseinrichtung übertragen und dort in einem entsprechenden Datenspeicher gespeichert werden. Somit werden die identischen Zustände in der ersten und zweiten Sende-/Empfangseinrichtung nicht nur durch die Duplizierung der Daten, sondern auch durch den Abgleich der gespeicherten Daten herbeigeführt, was das Verfahren beschleunigt.

Um auch in der Übertragungsrichtung vom Endgerät zum Datenübertragungssystem (Uplink) eine optimale und effiziente Datenweiterleitung zu gewährleisten, kann, soweit dies erforderlich ist, vorgesehen werden, dass während der Duplizierung der vom Datenübertragungssystem an das Endgerät übertragenen Daten eine Zusammenführung der vom Endgerät ausgesendeten und von der ersten Sende-/Empfangseinrichtung und der zweiten Sende-/Empfangseinrichtung empfangenen Daten - und soweit dies nicht bereits vom Datenübertragungssystem automatisch vorgegeben ist auch unter Ausschluss einer doppelten Weiterleitung identischer Daten - erfolgt. Es kann also bei Bedarf vorgesehen werden, dass die seitens des Datenübertragungssystems von den Sende-/Empfangseinrichtungen empfangenen Daten selektiert zu einem einzigen Datenstrom zusammengeführt werden, wobei doppelt empfangene Daten (einmal durch die erste und einmal durch die zweite Sende-/Empfangseinrichtung empfangen) aussortiert, dagegen von der einen Sende-/Empfangseinrichtung nicht empfangene Daten durch solche der anderen Sende-/Empfangseinrichtung aufgefüllt werden und so ein eindeutiger, kontinuierlicher Datenstrom erzeugt wird.

Die vorgenannten Vorgänge werden in der Regel bis zum erfolgreichen Ende des Handovers aufrecht erhalten. Nach erfolgreicher Durchführung des Handovers kann die Duplizierung der Daten beendet werden, der Datenstrom bzw. der Datenweiterleitungsweg kann dann innerhalb des Datenübertragungssystems optimiert werden, so dass z.B. die Daten von und zu dem Endgerät nur noch über die zweite Sende-Empfangseinrichtung geführt werden, die erste Sende-/Empfangseinrichtung jedoch nicht mehr in diese Datenweiterleitung eingebunden werden muss.

Um eine möglichst einfache Steuerung der Duplizierung zu Erreichen, kann die Duplizierung der Daten durch die erste Sende-/Empfangseinrichtung initiiert werden, da in ihr alle nötigen Informationen über die Notwendigkeit und den aktuellen Status eines Handovers eines von ihr versorgten Endgerätes vorliegen.

Als erfindungsgemäße Anordnung wird ein mobiles Datenübertragungssystem mit mehreren Sende-Empfangseinrichtungen zur Übertragung von Daten an mobile Endgeräte vorgeschlagen, wobei das Datenübertragungssystem Einrichtungen zur Datenweiterleitung nach dem Internet Protokoll aufweist. Es ist nun vorgesehen, dass das Datenübertragungssystem Einrichtungen zur Duplizierung von Daten aufweist, die mit mindestens zwei Sende-/Empfangseinrichtungen verbunden sind. Somit kann durch diese Einrichtungen zur Duplizierung auf einfache Weise eine Bereitstellung der an ein Endgerät zu übertragenden Daten für die erste und zweite Sende-/Empfangseinrichtung erfolgen, was die Datenweiterleitung im Rahmen des Handovers wesentlich vereinfacht.

Das Datenübertragungssystem kann, wie bereits ausgeführt, grundsätzlich zur Übertragung unterschiedlichster Arten von Daten ausgebildet sein. Speziell jedoch kann das Datenübertragungssystem als Mobilfunksystem ausgebildet sein. Beispielsweise kann das Mobilfunksystem Einrichtungen zur Funkübertragung nach einem Standard der zweiten Mobilfunk-Generation wie GSM und Festnetzeinrichtungen nach einem Standard der dritten Mobilfunkgeneration wie UMTS oder UTRAN aufweisen. Speziell kann das Datenübertragungssystem als GERAN-System ausgebildet sein, das ein Funkzugangs-Netzwerk (Access Network) der zweiten Mobilfunkgeneration bildet, welches Schnittstellen zu einem Vermittlungsnetzwerk (Core Network)der dritten Mobilfunkgeneration von Mobilfunknetzen aufweist. Es sind jedoch auch andere Arten von Mobilfunknetzen im Rahmen dieser Erfindung denkbar.

Ein spezielles Ausführungsbeispiel der vorliegenden Erfindung wird nachfolgend anhand der Figuren 1 bis 4 erläutert.

Es zeigen:
- Fig. 1:: Teilnehmer-Datenstrom während des Handovers
- Fig. 2:: Signalisierungsschema zu den Abläufen nach Fig. 1
- Fig. 3:: Detaillierte Darstellung der Abläufe nach Fig. 1
- Fig. 4:: Darstellung der Adressierung des duplizierten Datenstroms

Die vorliegende Erfindung wird anhand eines Handover-Vorgangs unter Bezugnahme auf ein GERAN-System erläutert, wobei die einzelnen Komponenten des GERAN-Systems durch ein IP-Netzwerk verbunden sind. Die vorliegende Erfindung ist gerade für solch eine solche paketdatenbasierte Datenweiterleitung auf Basis des Internet Protokolls geeignet, da dort eine Duplizierung von Datenpaketen, wie sie erfindungsgemäß vorgeschlagen wird, auf einfache Weise erfolgen kann.

Im folgenden wird unter einer Sende-/Empfangseinrichtung das System eines Basisstationscontrollers BSC verstanden. Es wird dabei im folgenden aus Gründen der Einfachheit nicht weiter dargestellt, dass ein solcher Basisstationscontroller BSC zum senden und empfangen von Daten noch spezielle, als Basisstationen BS bezeichnete Einrichtungen benötigt, die die eigentlichen Antennenfunktionen übernehmen. Sofern im folgenden auf einen Basisstationscontroller BSC Bezug genommen wird, soll das Vorhandensein entsprechender mit dem Basisstationscontroller verbundener Basisstationen vorausgesetzt werden, so dass diese in den Darstellungen eines Basisstationscontrollers BSC mit enthalten sind, ohne explizit dargestellt zu sein.

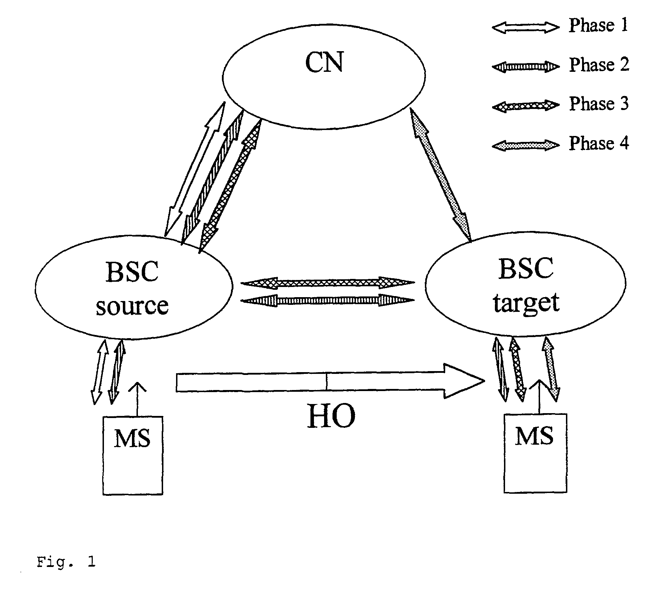

Fig. 1 zeigt dabei die Abläufe während des Handover-Vorgangs HO, die die Teilnehmerdaten, d.h. die Daten, die vom und zum Teilnehmer übertragen werden, betreffen. Der Handover-Vorgang weist dabei zumindest drei Phasen auf, eine vierte Phase kann optional hinzutreten. Bei den gezeigten Abläufen nach Fig. 1 wird angenommen, dass ein Duplizierer zur Duplizierung von IP-Paketen in einem Quell-Basisstationscontroller BSC Source und nicht, wie grundsätzlich ebenfalls möglich, im Core Network CN bzw. einem Serving GPRS Support Node SGSN angesiedelt ist. Dieser Quell-Basisstationscontroller BSC Source im Fall der Fig. 1 ist mit Sende-/Empfangseinrichtungen (BS) einer Zelle des Mobilfunksystems verbunden, in der sich ein bestimmtes Teilnehmerendgerät MS gerade aufhält. Grundsätzlich kann ein solcher Basisstationscontroller mit mehreren Sende-/Empfangseinrichtungen mehrerer Zellen verbunden sein.

Phase 1 betrifft die Situation vor dem Handover HO. Der derzeit für die Versorgung eines mobilen Teilnehmerendgerätes MS - d.h. zur Steuerung und Aufrechterhaltung der Kommunikationsverbindung zu diesem Teilnehmerendgerät - zuständige Basisstationscontroller BSC Source erkennt die Notwendigkeit für einen Handover für diesen Teilnehmer-Endgerät MS. Noch werden die Daten der Kommunikationsverbindung direkt zwischen dem Core Network CN und dem Teilnehmerendgerät MS über den Basisstationscontroller BSC Source weitergeleitet, wie durch die entsprechenden Doppelpfeile angedeutet. Der versorgende Basisstationscontroller BSC Source beginnt aber bereits, mit demjenigen Basisstationscontroller BSC Target, der zukünftig die Versorgung des Teilnehmerendgerätes übernehmen soll, Signalisierungsdaten wie z.B. über die Bereitstellung von Übertragungskapazitäten (Resource allocation) auszutauschen, wie ebenfalls durch Doppelpfeile angedeutet.

In der Phase 2 werden die Teilnehmerdaten in der Abwärtsrichtung (Downlink) vom Core Network CN zum Teilnehmer-Endgerät MS in dem versorgenden Basisstationscontroller BSC Source dupliziert und einerseits zur aktuell versorgenden Zelle des Mobilfunksystems weitergeleitet, andererseits auch zu dem Basisstationscontroller BSC Target geleitet, der das Teilnehmerendgerät MS nach einem erfolgten Handover HO versorgen soll. In der Aufwärtsrichtung vom Teilnehmerendgerät MS zum Core Network CN kann es sein, dass die vom Teilnehmerendgerät gesendeten Daten von beiden Basisstationscontrollern empfangen werden. Somit muss hier eine Auswahl aus den von den beiden Basisstationscontrollern BSC Source und BSC Target empfangenen Daten erfolgen, damit einerseits sichergestellt ist, dass die Daten nicht doppelt übertragen werden, aber trotzdem alle Daten an das Core Network CN weitergeleitet werden. Während der Phase 2 vollzieht das Teilnehmerendgerät MS auch den tatsächlichen Wechsel vom bisherigen Basisstationscontroller BSC Source zum neuen Basisstationscontroller BSC Target, wobei dieser Vorgang vom Mobilfunksystem bzw. vom Basisstationscontroller BSC Source gesteuert abläuft. Der nun zuständige Basisstationscontroller BSC Target erfasst das Teilnehmerendgerät MS und übernimmt die Aufgabe der Aufrechterhaltung der Kommunikationsverbindung zu dem Teilnehmerendgerät.

Während der Phase 3 werden die Übertragungskapazitäten des bisherigen Basisstationscontrollers BSC Source bzw. der bisher versorgenden Zelle wieder freigegeben und damit die Kommunikationsverbindung zum Teilnehmerendgerät abgebaut. Allerdings werden weiterhin innerhalb des Mobilfunk-Netzwerkes die Teilnehmerdaten von dem nun versorgenden Basisstationscontroller BSC Target über den bisher versorgenden Basisstationscontroller BSC Source an das Core Network CN weitergeleitet und umgekehrt. Dies ist in Fig. Wiederum durch Doppelpfeile angedeutet. Sofern nun kein weiterer Bedarf oder keine weitere Möglichkeit zur Optimierung des Datenflusses im Mobilfunk-Netzwerk besteht, kann Phase 3 die abschließende Phase des Handovers sein, z.B. wenn lediglich ein Intra-BSC-Handover erfolgte und BSC Source und BSC Target damit identisch sind oder keine direkte Datenverbindung zwischen dem Basisstationscontroller BSC Target und dem Core Network CN besteht oder falls entgegen den bisherigen Annahmen vorgesehen wurde, dass die Duplizierung der Teilnehmerdaten nicht in einem Basisstationscontroller BSC Source, sondern direkt im Core Network CN erfolgt.

Sofern jedoch die Notwendigkeit und auch die Möglichkeit einer Optimierung des Datenflusses besteht, wird Phase 4 durchgeführt, in der der Datenstrom nicht mehr über den bisherigen Basisstationscontroller BSC Source geführt wird, sondern die Teilnehmerdaten nunmehr direkt zwischen dem Core Network CN und dem nunmehr das Teilnehmerendgerät MS versorgenden Basisstationscontroller BSC Target ausgetauscht werden.

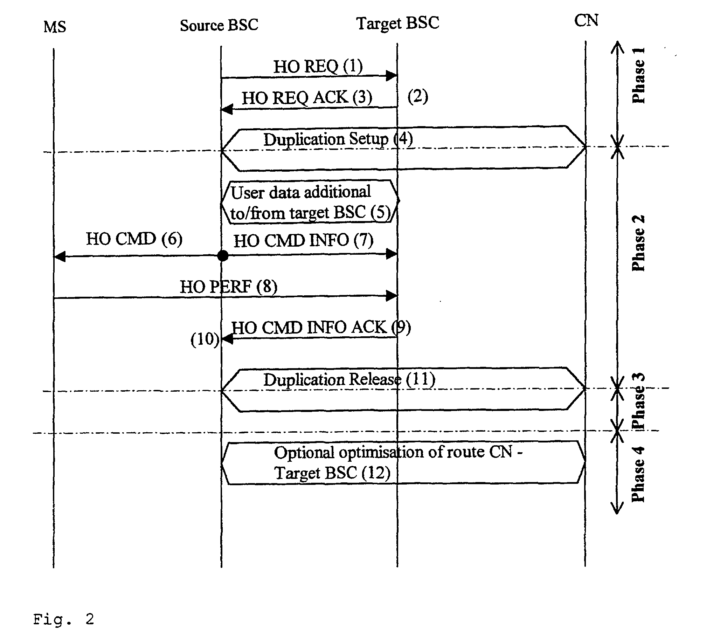

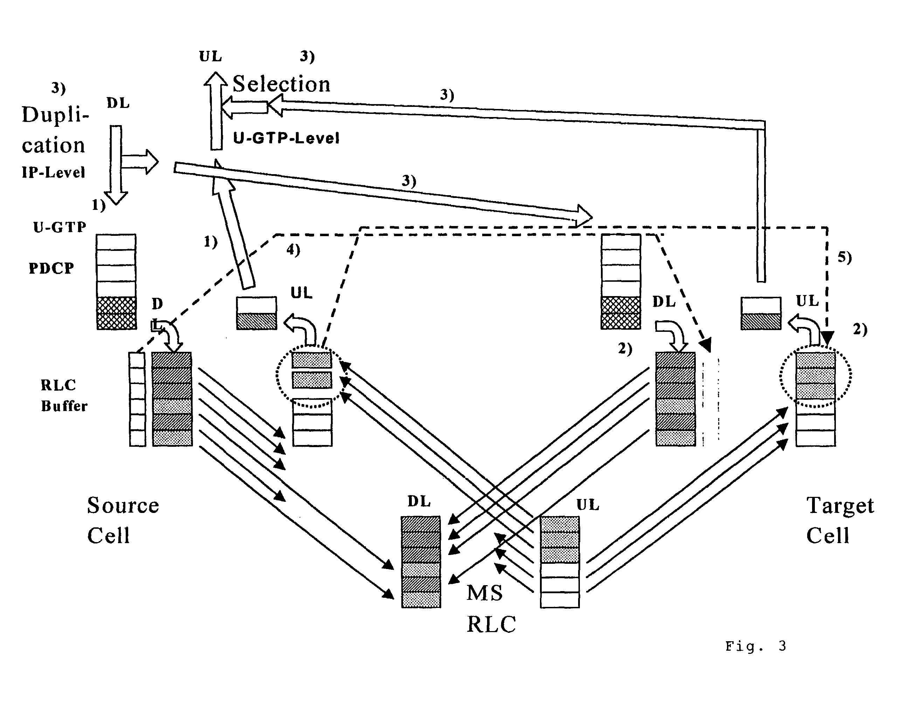

Fig. 2 zeigt den Ablauf der Signalisierung während des in Fig. 1 dargestellten Handovers HO. Insbesondere ist in Fig. 2 auch dargestellt, welche der Signalisierungskommandos in welcher der Phasen 1 bis 4 ausgetauscht werden. Die einzelnen Signalisierungsschritte sind in Klammern von 1 bis 12 durchnummeriert und es werden im folgenden diese einzelnen Schritte erläutert.
(1) Der aktuell das Teilnehmerendgerät MS versorgende Basisstationscontroller BSC Source erkennt die Notwendigkeit eines Handovers und schickt eine Anfrage für einen Handover (HO Request Message) HO REQ zu dem Basisstationscontroller BSC Target, der zukünftig das Teilnehmerendgerät MS versorgen soll. Diese Nachricht HO REQ kann entweder direkt von dem Basisstationscontroller BSC Source zu dem Basisstationscontroller BSC Target geleitet werden oder sie kann über das Core Network CN an den Basisstationscontroller BSC Target geleitet werde, ohne dass das Core Network CN eine weitere Verarbeitung dieser Nachricht durchführt. Die Nachricht HO REQ enthält alle Informationen über alle Funkressourcen (Kanäle), die von dem Basisstationscontroller BSC Target für das zu versorgende Teilnehmerendgerät angefordert werden. Die Informationen der HO REQ-Nachricht erlauben es dem Basisstationscontroller BSC Target, ein Abbild der Konfiguration des Radio Link Control (RLC)-Buffers (Steuerungsdaten der Kommunikationsverbindung) zu erstellen.
(2) Sobald der Basisstationscontroller BSC Target die Nachricht HO REQ empfängt, überprüft er die zur Verfügung stehenden Übertragungskapazitäten. Sofern ausreichend Übertragungskapazitäten zur Verfügung stehen, werden diese für die aufzubauende Verbindung zum Teilnehmerendgerät MS reserviert.
(3) Der Basisstationscontroller BSC Target antwortet dem Basisstationscontroller BSC Source auf die Nachricht HO REQ mit der Bestätigungsnachricht HO Request Acknowledge HO REQ ACK. Diese Nachricht enthält eine komplette Beschreibung der vom Basisstationscontroller BSC Target reservierten Übertragungskapazitäten (hierauf wird unter Schritt (5) zurückgegriffen) sowie zusätzliche Informationen, die für die Duplizierung bzw. Selektion von Teilnehmerdaten im nachfolgenden Schritt (4) benötigt werden.
(4) Der Basisstationscontroller BSC Source erhält die Nachricht HO REQ ACK und initiiert die Duplizierung der Teilnehmerdaten in der Abwärtsrichtung (Downlink), wie beispielsweise von U-GTP-Paketen, auf der IP-Ebene. Es wird dabei der IP-Datenstrom, der durch eine entsprechende IP-Adresse charakterisiert wird und der die Datenpakete eines U-GTP-Datenstroms enthält, in geeigneter Weise umadressiert. Insbesondere wird vorgesehen, durch die geänderte IP-Adresse einen Duplizierer anzusprechen, der dann die weitere Duplizierung durchführt. Diese IP-Adressänderung (Rerouting) erfolgt bevorzugt in einem Serving GPRS Support Node SGSN. Die weiteren Details der Duplizierung werden nachfolgend erläutert. In der Aufwärtsrichtung (Uplink) kann zur Sicherstellung einer Selektion der Teilnehmerdaten auf weitere Verfahrensschritte verzichtet werden, wenn vorgesehen ist, dass Einrichtungen des Mobilfunk-Netzwerks wie der Serving GPRS Support Node SGSN ohnehin die Adressierungsdaten (Header) der vom Teilnehmerendgerät MS versandten Daten analysieren, was unmittelbar eine Datenselektion gestattet. Sofern dies jedoch nicht vorgesehen ist, muss eine entsprechende Selektion der Teilnehmerdaten in der Aufwärtsrichtung initiiert werden.
(5) Es wird nun die Duplizierung der Teilnehmerdaten in der Abwärtsrichtung (Downlink) und die Selektion der Teilnehmerdaten in der Aufwärtsrichtung (Uplink) auf Ebene der IP-Pakete gestartet und so lange aufrechterhalten, bis die Duplizierungsfunktion wieder aufgehoben wird.
(6) Sobald die Duplizierung und Selektion vollständig eingerichtet ist, kann der eigentliche Handover HO des Teilnehmerendgerätes MS durchgeführt werden. Zu diesem Zweck sendet der Basisstationscontroller BSC Source an das Teilnehmerendgerät das Handover-Kommando HO CMD und gleichzeitig an den Basisstationscontroller BSC Target die Mitteilung HO CMD INFO, dass das Kommando HO CMD versandt wurde. Das Handover-Kommando HO CMD informiert das Teilnehmerendgerät MS, auf welche Übertragungskanäle der zukünftig versorgenden Zelle es wechseln muss, um weiterhin die Kommunikationsverbindung aufrecht zu erhalten.
(7) Die Nachricht HO CMD INFO informiert den Basisstationscontroller BSC Target für die Abwärtsrichtung (Downlink), welche Datenpakete (Radio Link Control RLC-Pakete) bereits gesendet wurden und, sofern eine Empfangsbestätigung vorgesehen ist, welche Datenpakete bereits bestätigt wurden. Für die Aufwärtsrichtung enthält diese Nachricht diejenigen Datenpakete (RLC-Pakete), die zwar bereits von dem Basisstationscontroller BSC Source empfangen wurden, die aber noch nicht auf der PDCP-Paketdatenebene weitergeleitet wurden, d.h. diejenigen Teile desjenigen PDCP-Datenpakets, das gerade von dem Teilnehmerendgerät versandt wird. Die HO CMD INFO-Nachricht enthält diese Informationen für die gesamten Radio Link Control RLC-Übertragungskapazitäten, die einem bestimmten Teilnehmer-Endgerät zugewiesen wurden. Dieser Verfahrensschritt wird im weiteren anhand der Fig. 3 nochmals detailliert ausgeführt.
(8) Die erfolgreiche Einrichtung der neuen Funkverbindung zwischen dem Teilnehmerendgerät MS und dem Basisstationscontroller BSC Target wird dem Basisstationscontroller BSC Target vom Teilnehmerendgerät MS durch eine Nachricht, dass der Handover durchgeführt wurde (HO Performed) HO PERF mitgeteilt.
(9) Sobald das Teilnehmerendgerät erfolgreich die Funkverbindung zu der neuen, nunmehr versorgenden Zelle hergestellt hat, kann der Basisstationscontroller BSC Target den Empfang der Nachricht HO CMD INFO durch die Aussendung der Nachricht HO Command Information Acknowledge HO CMD INFO ACK an den Basisstationscontroller BSC Source bestätigen
(10) Durch die Nachricht HO CMD INFO ACK wird der Basisstationscontroller BSC Source veranlasst, die Übertragungskanäle, die bislang für die Funkverbindung zu dem Teilnehmerendgerät reserviert waren, und auch die entsprechenden Radio Link Control RLC-Übertragungskapazitäten wieder freizugeben.
(11) Eine Duplizierung der Teilnehmerdaten in der Abwärtsrichtung (Downlink) ist nunmehr nicht mehr erforderlich. Es veranlasst entweder der Basisstationscontroller BSC Target oder, wie in Fig. 2 dargestellt, der Basisstationscontroller BSC Source die Einstellung der Duplizierung (Duplication Release) der Teilnehmerdaten. Es wird dadurch die IP-Adresse des Basisstationscontrollers BSC Target für den Teilnehmerdatenstrom (U-GTP-Datenstrom) in Abwärtsrichtung (Downlink) ausgewählt, bevorzugt durch einen Serving GPRS Support Node SGSN, anstatt wie unter (4) beispielhaft vorgesehen, einen Duplizierer anzusprechen.
(12) Es kann sich nun die optionale Phase 4 anschließen, während der eine Optimierung des Datenflusses zwischen dem Core Network CN und dem Basisstationscontroller BSC Target erfolgen kann.

Fig. 3 zeigt eine detailliertere Übersicht über die vorstehend beschriebenen Verfahrensschritte. Dabei wird die Verarbeitung der Teilnehmerdaten in der Aufwärtsrichtung (Uplink) und der Abwärtsrichtung (Downlink) in ausführlicherer Weise dargestellt. Fig. 3 veranschaulicht dies anhand von lediglich einem Verbindungskanal (d.h. von nur einer RLC-Übertragungseinheit) pro Übertragungsrichtung, aber es können natürlich grundsätzlich auch mehrere pro Übertragungsrichtung vorgesehen sein. Die Ziffern 1), 2) usw. bezeichnen die verschiedenen Phasen bzw. Schritte des Verfahrensablaufes und werden nachfolgend detailliert ausgeführt.

Die mit 1) bezeichneten Abläufe stellen den Strom der Teilnehmerdaten (hier: IP-Pakete, die U-GTP-Pakete enthalten) hin zum Teilnehmerendgerät MS und ausgehend vom Teilnehmerendgerät MS dar, ohne dass eine Duplizierung oder Selektion der Teilnehmerdaten erfolgt. Dies entspricht daher der vorgenannten Phase 1.

Mit 2) werden die RLC- und PDCP-Übertragungseinheiten bezeichnet, die in der Zielzelle (Target Cell) bzw. demjenigen Basisstationscontroller BSC Target erzeugt werden müssen, welche nach dem Handover das Teilnehmerendgerät MS versorgen, wenn der Basisstationscontroller BSC Target mit der Nachricht HO REQ ACK antwortet. Diese RLC- und PDCP-Übertragungseinheiten müssen zu den entsprechenden Einheiten in der Ursprungszelle (Source Cell) bzw. dem Basisstationscontroller BSC Source, die ursprünglich das Teilnehmerendgerät MS vor dem Handover versorgen, identisch sein.

Unter 3) ist die Ausführung der Duplizierung bzw. Selektion der Teilnehmerdaten dargestellt, die der Basisstationscontroller BSC Source nach dem Erhalt der Nachricht HO REQ ACK initiiert.

Die Duplizierung erlaubt es, alle Teilnehmerdaten, hier IP-Pakete, die in Abwärtsrichtung (Downlink) versendet werden, nicht nur an den Basisstationscontroller BSC Source, sondern auch an den Basisstationscontroller BSC Target zu senden. Diese Duplizierung basiert insbesondere auf der Nummerierung der U-GTP-Datenpakete. Diese Nummerierung ist für die weitere Verarbeitung der Datenpakete in den Basisstationscontrollern BSC Source und BSC Target nötig (siehe dazu die Ziffern 4) und 5)), damit in den Basisstationscontrollern BSC Source und BSC Target gleiche Informationen darüber vorliegen, welches PDCP-Datenpaket gerade in dem RLC-Datenpuffer (RLC-Buffer) verarbeitet und insbesondere segmentiert wird.

Die Selektierung der Teilnehmerdaten bedeutet einfach, dass Teilnehmerdatenpakete, hier U-GTP-Datenpakete, sowohl von dem Basisstationscontroller BSC Source als auch von dem Basisstationscontroller BSC Target empfangen und in Aufwärtsrichtung (Uplink) weitergeleitet werden können. Doppelter Empfang von Datenpaketen kann dabei grundsätzlich vorkommen, es müssten dann die eine Hälfte der doppelt empfangenen Pakete aussortiert werden. Ist jedoch ein doppelter Empfang ausgeschlossen, wie bei GERAN-Systemen angenommen, so ist eine solche Aussortierung nicht nötig. Es ist dann lediglich auf die richtige Zusammenführung der von den beiden Basisstationscontrollern BSC Source und BSC Target empfangenen Teile der Teilnehmerdaten in der richtigen Reihenfolge zu achten.

Unter Ziffern 4) und 5) sind die Abläufe aufgezeigt, die erfolgen, nachdem die Duplizierung und Selektion gemäß Ziffer 3) erfolgreich eingerichtet wurden. Der Basisstationscontroller BSC Source kann dann das Teilnehmerendgerät MS veranlassen, von der Ursprungszelle Source Cell in die Zielzelle Target Cell zu wechseln, was durch Aussendung des Kommandos HO CMD erfolgt. Gleichzeitig mit der Aussendung des Kommandos HO CMD erfolgt die Aussendung der Benachrichtigung HO CMD INFO an den Basisstationscontroller BSC Target. Diese Nachricht Ho CMD INFO ist durch die gestrichelten Pfeile mit den Ziffern 4) und 5) angedeutet.

Dabei bedeutet der Pfeil mit der Ziffer 4) insbesondere, dass der Basisstationscontroller BSC Source dem Basisstationscontroller BSC Target ein Bitmuster sendet, welches den Status "Gesendet" bzw. "Bestätigt" des RLC-Datenpuffers (RLC-Buffer) für dasjenige PDCP-Datenpaket darstellt, das gerade gesendet wird. Der Pfeil mit Ziffer 4) steht auch für Informationen darüber, welches PDCP-Datenpaket gerade gesendet wird. Nachdem jedoch mehrere U-GTP-Datenströme durch Multiplexen in einem PDCP-Datenstrom zusammengefasst werden können, kann es sinnvoll sein, zusätzlich oder statt der Nummer des derzeit gesendeten PDCP-Datenpakets die Nummer des oder der derzeit gesendeten U-GTP-Datenpakete an den Basisstationscontroller BSC Target zu übermitteln.

Der gestrichelte Pfeil mit der Ziffer 5) bedeutet, dass bereits von dem Basisstationscontroller BSC Source empfangene RLC-Datenpakete eines noch nicht vollständig empfangenen PDCP-Datenpakets zu dem RLC-Datenpuffer (RLC-Buffer) für die Aufwärtsrichtung (Uplink) des Basisstationscontrollers BSC Target übertragen werden, damit dort die vollständige Auffüllung des PDCP-Datenpakets mit den noch fehlenden RLC-Datenpaketen erfolgen kann. Dies vermeidet die Notwendigkeit eines nochmaligen Versendens der vom Basisstationscontroller BSC Source empfangenen Datenpakete durch das Teilnehmerendgerät MS.

Mit den nach Ziffer 4) und 5) erhaltenen Informationen kann der Basisstationscontroller BSC Target die Aufgabe übernehmen, die in der Abwärtsrichtung (Downlink) noch nicht gesendeten oder bestätigten RLC-Datenpakete zu versenden, da nun in dem Basisstationscontroller ein Abbild des RLC-Datenpuffers des Basisstationscontrollers BSC Target vorliegt. Andererseits kann nun der Basisstationscontroller BSC Target im Falle einer Datenübertragung mit Bestätigung in der Aufwärtsrichtung (Uplink) diejenigen RLC-Datenpakete bestätigen, die in der Aufwärtsrichtung (Uplink) bereits vom Basisstationscontroller BSC Target empfangen wurden. Sobald ein bislang unvollständig vom Basisstationscontroller BSC Source empfangendes PDCP-Datenpaket durch Empfang der fehlenden RLC-Datenpakete durch den Basisstationscontroller BSC Target komplettiert werden kann, kann das PDCP-Datenpaket mit Hilfe der unter Ziffer 3) eingerichteten Selektierungsfunktion als U-GTP-Datenpaket zum Core Network CN versandt werden.

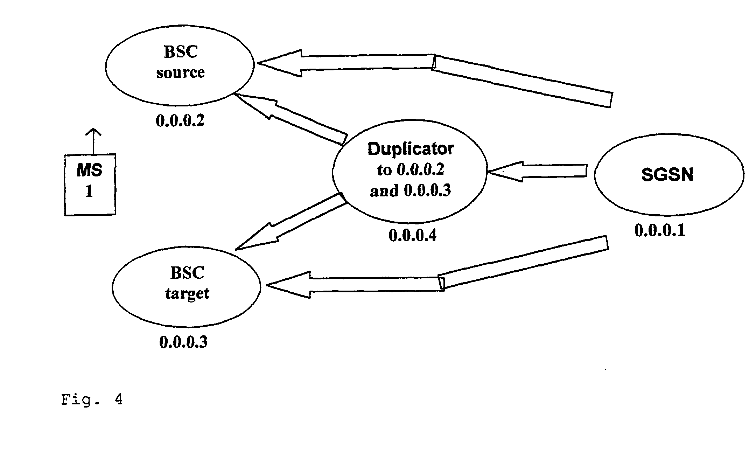

In Fig. 4 sind die logischen Funktionen der Duplizierung dargestellt. Es sind dabei zwei grundsätzliche Möglichkeiten denkbar:
1) Eine rein IP-basierte Lösung, wobei eine bestimmte IP-Adresse (insbesondere die IP-Adresse eines Duplikators), die von dem Core Network CN oder speziell von einem Serving GPRS Support Node SGSN zur Adressierung verwendet wird, selbst wiederum auf zwei weitere IP-Adressen zeigt, an die die entsprechenden IP-Datenpakete weiterzuleiten sind. Fig. 4 zeigt hierzu zunächst den Datenfluss vom Serving GPRS Support Node SGSN zum Basisstationscontroller BSC Source mit der IP-Adresse 0.0.0.2 während der bereits beschriebenen Phase 1, dann die durch den Basisstationscontroller BSC Source eingeleitete Duplizierung in der Phase 2 durch Adressierung eines Duplizierers (Duplicator) durch entsprechende Änderung der IP-Adressen der IP-Datenpakete in dem Serving GPRS Support Node SGSN auf die IP-Adresse 0.0.0.4 des Duplizierers, wobei der Duplizierer (Duplicator) nun die IP-Datenpakete sowohl an den Basisstationscontroller BSC Source mit der IP-Adresse 0.0.0.2 als auch an den Basisstationscontroller BSC Target mit der IP-Adresse 0.0.0.3 weiterleitet. In Phase 3 bzw. 4 werden die IP-Datenpakete nach Beendigung der Duplizierung wie bereits beschrieben nur noch vom Serving GPRS Support Node SGSN direkt an den Basisstationscontroller BSC Target mit der IP-Adresse 0.0.0.3 gesendet.
   Der Vorteil dieser Lösung ist, dass sie auf einfache Weise eingerichtet werden kann. Es muss keine zusätzliche Verarbeitung der Adressierungsdaten (Header) der U-GTP-Datenpakete erfolgen. Außerdem ist der Aufwand an Signalisierung für diese Lösung sehr gering, da der Duplikator nicht für jeden Übertragungskanal separat konfiguriert werden muss. Es muss jedoch eine ausreichende Anzahl von IP-Adressen bereitgestellt werden, da jede IP-Adresse eines Duplizierers zwei weitere IP-Adressen repräsentiert, an die die IP-Pakete im Rahmen der Duplizierung weitergeleitet werden sollen. Sind nun nicht nur die zwei Basisstationscontroller aus Fig. 4, sondern ein dritter Basisstationscontroller vorhanden, z.B. mit der Adresse 0.0.0.5, und sollen Handovers zwischen allen drei Basisstationscontrollern möglich sein, so sind drei Duplizierer nötig ( Duplizierung nach 0.0.0.2 und 0.0.0.3, nach 0.0.0.2 und 0.0.0.5 und nach 0.0.0.3 und 0.0.0.5) und es sind entsprechend drei IP-Adressen für die Duplizierer bereitzustellen. Bei zunehmender Zahl der Basisstationscontroller nimmt entsprechend auch die Zahl der Duplizierer und ihrer IP-Adressen zu.
2) Eine gemischte Lösung auf IP- und U-GTP-Basis, wobei die Duplizierung nicht auf der IP-Ebene, sondern auf der U-GTP-Ebene erfolgt. Dies ist in den Figuren nicht dargestellt. Hierbei besitzt der Duplizierer während der Phase 2 die Kenntnis über die U-GTP-Adressen der U-GTP-Datenpakete und darüber, wohin das jeweilige Datenpaket weiterzuleiten ist. Hierzu empfängt der Duplizierer IP-Datenpakete vom Serving GPRS Support Node SGSN, entpackt diese und liest die Adressdaten (Header) der U-GTP-Datenpakete aus. Je nach der Adresse, die in den Adressdaten (Header) der U-GTP-Datenpakete angegeben ist, leitet der Duplizierer das entsprechende U-GTP-Datenpaket über die beiden IP-Datenverbindungen zu den Basisstationscontrollern BSC Source und BSC Target entweder nur an einen der Basisstationscontroller oder an beide Basisstationscontroller. Grundsätzlich können auch hier mehrere Basisstationscontroller vorgesehen sein. Somit ist nur eine einzige IP-Adresse für nur einen einzigen Duplizierer nötig, der eine Duplizierung der Teilnehmerdaten an zwei Basisstationscontroller auch bei Vorhandensein von mehr als zwei möglichen Basisstationscontrollern als Ziel durchführen kann. Allerdings muss vorgesehen werden, dass der Duplizierer auf die Adressdaten der U-GTP-Pakete zugreift und es muss der Duplizierer für jedes Durchführen einer Phase 2 eines Handovers und für jeden U-GTP-Datenstrom separat angepasst werden, weshalb der entsprechend höhere Signalisierungsaufwand zu gewährleisten ist.

## Patentansprüche

1. Verfahren zur Durchführung eines Handovers eines mobilen Endgerätes (MS) in einem mobilen Datenübertragungssystem von einer ersten Sende-/Empfangseinrichtungen (BSC Source) des mobilen Datenübertragungssystems zu einer zweiten Sende-/Empfangseinrichtung (BSC Target), bei dem- zumindest während eines Teils der Dauer des Handovers die vom mobilen Datenübertragungssystem an das Endgerät übertragenen Daten im mobilen Datenübertragungssystem dupliziert und sowohl an die erste Sende-/Empfangseinrichtung (BSC Source) als auch an die zweite Sende-/Empfangseinrichtung
(BSC Target) weitergeleitet werden,
- zur Duplizierung der Daten eine Änderung der Adressierung der noch nicht duplizierten Daten erfolgt,
**dadurch gekennzeichnet,**
**dass** als zu ändernde Adresse eine Adresse einer Einrichtung (Duplicator) des mobilen Datenübertragungssystems gewählt wird, wobei die Duplizierung in dieser Einrichtung erfolgt.

2. Verfahren nach Anspruch 1,
**dadurch gekennzeichnet,**
**dass** in dem mobilen Datenübertragungssystem zumindest teilweise eine Datenweiterleitung auf Basis des Internet Protokolls (IP) erfolgt.

3. Verfahren nach einem der Ansprüch 1 bis 2,
**dadurch gekennzeichnet,**
**dass** im Rahmen der Duplizierung der Daten in einem Datenspeicher (RLC-Buffer) der ersten Sende-/Empfangseinrichtung (BSC Source) gespeicherte, an das Endgerät (MS) zu sendende Daten und vom Endgerät (MS) empfangene Daten an die zweite Sende-/Empfangseinrichtung (BSC Target) übertragen und dort in einem entsprechenden Datenspeicher (RLC Buffer) gespeichert werden.

4. Verfahren nach einem der Ansprüche 1 bis 3, **dadurch gekennzeichnet,**
**dass** während der Duplizierung der vom Datenübertragungssystem an das Endgerät (MS) übertragenen Daten eine Zusammenführung der vom Endgerät (MS) ausgesendeten und von der ersten Sende-/Empfangseinrichtung (BSC Source) und der zweiten Sende-/Empfangseinrichtung (BSC Target) empfangenen Daten unter Ausschluss einer doppelten Weiterleitung identischer Daten erfolgt.

5. Verfahren nach einem der Ansprüche 1 bis 4,
**dadurch gekennzeichnet,**
**dass** nach erfolgreicher Durchführung des Handovers die Duplizierung der Daten beendet wird.

6. Verfahren nach Anspruch 5,
**dadurch gekennzeichnet,**
**dass** nach einer Beendigung der Duplizierung der Datenweiterleitungsweg innerhalb des Datenübertragungssystems optimiert wird.

7. Verfahren nach einem der Ansprüche 1 bis 6,
**dadurch gekennzeichnet,**
**dass** die Duplizierung der Daten durch die erste Sende-/Empfangseinrichtung (BSC Source) initiiert wird.

8. Mobiles Datenübertragungssystem zur Durchführung eines Handovers eines mobilen Endgerätes (MS) von einer ersten Sende-/Empfangseinrichtungen (BSC Source) zu einer zweiten Sende-/Empfangseinrichtung (BSC Target),
- mit einer Einrichtung (Duplicator) zum Duplizieren der vom mobilen Datenübertragungssystem an das Endgerät übertragenen Daten und zum Weiterleiten der Daten sowohl an die erste Sende-/Empfangseinrichtung (BSC Source) als auch an die zweite Sende-/Empfangseinrichtung (BSC Target),
- mit Mitteln (SGSN) zur Änderung der Adressierung der noch nicht duplizierten Daten,
**dadurch gekennzeichnet,**
**dass** die Mittel (SGSN) derart ausgebildet sind, dass sie zumindest während eines Teils der Dauer des Handovers als zu ändernde Adresse eine Adresse der Einrichtung (Duplicator) wählt.

9. Anordnung nach Anspruch 8,
**dadurch gekennzeichnet,**
**dass** das Datenübertragungssystem als Mobilfunksystem ausgebildet ist.

10. Anordnung nach Anspruch 9,
**dadurch gekennzeichnet,**
**dass** das Mobilfunksystem Einrichtungen zur Funkübertragung nach einem Standard der zweiten Generation von Mobilfunksysteme und Festnetzeinrichtungen nach einem Standard der dritten Generation von Mobilfunksystemen aufweist.

## Claims

1. Method for carrying out a handover for a mobile terminal (MS) in a mobile data transmission system from a first transmitting/receiving device (BSC Source) in the mobile data transmission system to a second transmitting/receiving device (BSC Target), in which, at least for a portion of the duration of the handover, the data which is transmitted from the mobile data transmission system to the terminal is duplicated in the mobile data transmission system, and is passed on not only to the first transmitting/receiving device (BSC Source) but also to the second transmitting/receiving device (BSC Target),
- the data is duplicated by changing the addressing of the data which has not yet been duplicated,
**characterized in that**
an address of a device (duplicator) in the mobile data transmission system is selected as the address to be changed, with the duplication being carried out in this device.

2. Method according to Claim 1,
**characterized**
**in that**, at least at times, data is passed on in the mobile data transmission system on the basis of the Internet Protocol (IP).

3. Method according to one of Claims 1 to 2,
**characterized**
**in that**, data which is stored in a data memory (RLC buffer) in the first transmitting/receiving device (BSC Source) in the course of duplication of the data, data which is to be sent to the terminal (MS) and data which is received from the terminal (MS) is transmitted to the second transmitting/receiving device (BSC Target) and are stored in a corresponding data memory (RLC buffer) there. and are stored in a corresponding data memory (RLC buffer) there.

4. Method according to Claims 1 to 3,
**characterized**
**in that**, during the duplication of the data which is transmitted from the data transmission system to the terminal (MS), the data which is transmitted from the terminal (MS) and is received by the first transmitting/receiving device (BSC Source) and by the second transmitting/receiving device (BSC Target) is combined, with identical data not being passed on twice.

5. The method according to one of Claims 1 to 4,
**characterized**
**in that**, once the handover has been carried out successfully, the duplication of the data is ended.

6. Method according to Claim 5,
**characterized**
**in that** the data route is optimized within the data transmission system after completion of the duplication process.

7. Method according to one of Claims 1 to 6,
**characterized**
**in that** the duplication of the data is initiated by the first transmitting/receiving device (BSC Source).

8. Mobile data transmission system for carrying out a handover for a mobile terminal (MS) from a first transmitting/receiving device (BSC source) to a second transmitting/receiving device (BSC Target),
- having a device (duplicator) for duplicating the data transmitted from the mobile data transmission system to the terminal and for passing on the data not only to the first transmitting/receiving device (BSC source) but also to the second the data which has not yet been duplicated,
**characterized**
**in that** the means (SGSN) are designed such that, at least for a portion of the duration of the handover, they select an address of the device (duplicator) as the address to be changed.

9. Arrangement according to Claim 8,
**characterized**
**in that** the data transmission system is a mobile radio system.

10. Arrangement according to Claim 9,
**characterized**
**in that** the mobile radio system has devices for radio transmission in accordance with a second-generation mobile radio system standard, and has landline network devices in accordance with a third-generation mobile radio system standard.

## Revendications

1. Procédé pour effectuer un transfert d'un équipement terminal mobile (MS) dans un système mobile de transmission de données depuis un premier dispositif d'émission/réception (BSC source) du système mobile de transmission de données vers un second dispositif d'émission/réception (BSC target), dans lequel, - au moins pendant une partie de la durée du transfert, les données transmises à l'équipement terminal par le système mobile de transmission de données sont dupliquées dans le système mobile de transmission de données et acheminées à la fois au premier dispositif d'émission/réception (BSC source) et au second dispositif d'émission/réception (BSC target),
- en vue de la duplication des données il est procédé à une modification de l'adressage des données non encore dupliquées,
**caractérisé en ce que**
il est choisi comme adresse à modifier une adresse d'un dispositif (duplicator) du système mobile de transmission de données, la duplication ayant lieu dans ce dispositif.

2. Procédé selon la revendication 1,
**caractérisé en ce que**
dans le système mobile de transmission de données il est procédé, au moins en partie, à un acheminement des données sur la base du protocole Internet (IP).

3. Procédé selon l'une des revendications 1 à 2,
**caractérisé en ce que**
dans le cadre de la duplication des données, des données mémorisées dans une mémoire de données (RLC buffer) du premier dispositif d'émission/réception (BSC source) et à envoyer à l'équipement terminal (MS) et des données reçues par l'équipement terminal (MS) sont transmises au second dispositif d'émission/réception (BSC target) et y sont mémorisées dans une mémoire de données (RLC buffer) correspondante.

4. Procédé selon l'une des revendications 1 à 3,
**caractérisé en ce que**
pendant la duplication des données transmises à l'équipement terminal (MS) par le système de transmission de données, il est procédé à un assemblage des données émises par l'équipement terminal (MS) et reçues par le premier dispositif d'émission/réception (BSC source) et le second dispositif d'émission/réception (BSC target), en excluant un double acheminement de données identiques.

5. Procédé selon l'une des revendications 1 à 4,
**caractérisé en ce que**
après avoir effectué le transfert avec succès, il est mis fin à la duplication des données.

6. Procédé selon la revendication 5,
**caractérisé en ce que**
après avoir mis fin à la duplication, la voie d'acheminement des données au sein du système de transmission de données est optimisée.

7. Procédé selon l'une des revendications 1 à 6,
**caractérisé en ce que**
la duplication des données est initiée par le premier dispositif d'émission/réception (BSC source).

8. Système mobile de transmission de données pour effectuer un transfert d'un équipement terminal mobile (MS) depuis un premier dispositif d'émission/réception (BSC source) vers un second dispositif d'émission/réception (BSC target),
- comprenant un dispositif (duplicator) pour dupliquer les données transmises à l'équipement terminal par le système mobile de transmission de données et pour acheminer les données à la fois au premier dispositif d'émission/réception (BSC source) et au second dispositif d'émission/réception (BSC target),
- comprenant des moyens (SGSN) pour modifier l'adressage des données non encore dupliquées,
**caractérisé en ce que**
les moyens (SGSN) sont réalisés de telle manière que, au moins pendant une partie de la durée du transfert, ils choisissent comme adresse à modifier une adresse du dispositif (duplicator).

9. Dispositif selon la revendication 8,
**caractérisé en ce que**
le système de transmission de données est réalisé comme système radio-mobile.

10. Dispositif selon la revendication 9,
**caractérisé en ce que**
le système radio-mobile comporte des dispositifs de radio-transmission selon un standard de la deuxième génération de systèmes radio-mobiles et des dispositifs de réseau fixe selon un standard de la troisième génération de systèmes radio-mobiles.
